# EUROPÄISCHE PATENTSCHRIFT

(11) **EP 1 441 877 B1**
(45) Veröffentlichungstag und Bekanntmachung des Hinweises auf die Patenterteilung: **31.05.2006**
(21) Anmeldenummer: 02782767.4
(22) Anmeldetag: 08.11.2002
(51) Int. Cl.: B23Q 3/157, B23Q 3/155

(54) **WERKZEUGWECHSELSYSTEM**
TOOL CHANGING SYSTEM
SYSTEME DE CHANGEMENT D'OUTIL

(30) Priorität: 08.11.2001 DE 10154480; 09.11.2001 DE 10154708
(43) Veröffentlichungstag der Anmeldung: 04.08.2004
(73) Patentinhaber: Ex-Cell-O GmbH, 73054 Eislingen (DE)
(72) Erfinder: HAGMANN, Michael, 73035 Göppingen (DE); WINCKLER, Friedrich, 73527 Schwäbisch Gmünd (DE)
(74) Vertreter: Hoeger, Stellrecht & Partner Patentanwälte
(86) Internationale Anmeldenummer: PCT/DE2002/004156
(87) Internationale Veröffentlichungsnummer: WO 2003/039809

(56) Entgegenhaltungen:
- EP-A- 0 900 627
- EP-A- 1 086 781
- US-A- 4 156 962
- US-A- 4 590 662
- US-A- 5 281 194

## Beschreibung

Die Erfindung betrifft ein Verfahren zum Wechseln von Werkzeugen einer Werkzeugmaschine, ein Werkzeugwechselsystem für eine Werkzeugmaschine und einen Beschickungswagen, der beim erfindungsgemäßen Verfahren einsetzbar ist.

Bei modernen Bearbeitungszentren sind zur Bewältigung der vielfältigen Zerspanungsaufgaben eine Vielzahl von Werkzeugen bereitzustellen. Um die Span-zu-Span-Zeiten minimal zu halten, sollen diese Werkzeugmagazine zum einen äußerst kompakt aufgebaut sein, um kurze Zugriffszeiten zu ermöglichen. Bei Bearbeitungszentren werden beispielsweise Scheibenmagazine, bei denen die Werkzeuge auf einer drehbaren Scheibe gelagert sind, Rechenmagazine mit rechenartigen Aufnahmen, in denen die Werkzeuge eingelegt sind oder Regalmagazine verwendet, aus denen das jeweils benötigte Werkzeug einer Spindel des Bearbeitungszentrums zugeführt wird.

Aus der US 4,156,962 ist ein Werkzeugwechselsystem bekannt, welches ein Werkzeugmagazin und einen Transportmechanismus umfaßt. Das Magazin hat eine Mehrzahl von rotierbaren koaxial angeordneten Trommeln, wobei jede Trommel eine radiale Ausnehmung zur Aufnahme eines Werkzeugs aufweist.

Der Erfindung liegt die Aufgabe zugrunde, ein Verfahren zum Wechseln von Werkzeugen einer Werkzeugmaschine und ein Werkzeugwechselsystem zur Verfügung zu stellen, mit dem die Span-zu-Span-Zeiten bei einem Werkzeugwechsel minimal sind.

Diese Aufgabe wird hinsichtlich des Verfahrens durch die Merkmalskombination des Patentanspruches 1 und hinsichtlich des Werkzeugwechselsystems durch die Merkmale des Patentanspruches 4 gelöst.

Bei dem erfindungsgemäßen Verfahren wird ein Werkzeugwechselsystem eingesetzt, bei dem die Werkzeuge in einem Werkzeugmagazin aufgenommen sind und mittels eines Bediengerätes an einen Werkzeugwechseler übergeben werden. Dieser Werkzeugwechsler läßt sich aus einer Übernahmeposition zur Übernahme des Werkzeuges von dem Bediengerät in eine Übergabeposition bringen, in der der Werkzeugwechsler in einen Arbeitsraum der Werkzeugmaschine eintaucht und ein in der Spindel aufgenommenes Werkzeug übernehmen oder das zuvor vom Bediengerät übernommene Werkzeug an die Spindel übergeben kann. D.h., der eingesetzte Werkzeugwechsler ist derart ausgebildet, dass er ein Werkzeug aus der Spindel übernehmen und ein neu einzuwechselndes Werkzeug zuführen kann. Ein Vorteil des erfindungsgemäßen Verfahrens liegt somit darin, dass sowohl durch das Bediengerät als auch durch den Werkzeugwechsler jeweils ein neu einzuwechselndes Werkzeug bereitgestellt wird, so dass praktisch ein Puffer von zwei Werkzeugen gebildet ist und die Span-zu-Span-Zeiten minimal sind. Da in dem Magazin praktisch eine beliebige Anzahl von Werkzeugen aufgenommen werden kann, können selbst komplexeste Zerspanungsarbeiten mit einer Vielzahl von Werkzeugwechseln vollautomatisch durchgeführt werden.

Das Werkzeugmagazin ist dabei derart ausgebildet, dass einzelne, in diesem aufgenommene Werkzeuge während der Bearbeitungs-Hauptzeit der Werkzeugmaschine ausgewechselt oder umsortiert werden können, so dass eine größtmögliche Flexibilität der Werkzeugmaschine gewährleistet ist.

Die Betriebssicherheit der Maschine läßt sich weiter verbessern, wenn der Verschleiß des Werkzeuges und der Werkzeugtyp oder sonstige für die Bearbeitung wesentliche Werkzeugparameter erfaßt und in Abhängigkeit von diesen Parametern Werkzeuge mittels des Bediengerätes aus dem Regal ausgeschleust oder zugeführt werden.

Bei dem erfindungsgemäßen Werkzeugwechselsystem wird das Werkzeugmagazin als Regal ausgeführt, in dem die Werkzeuge übereinanderliegend angeordnet und mit ihrer Achse parallel zur Z-Achse orientiert sind.

Das Werkzeugwechselsystem läßt sich besonders kompakt ausbilden, wenn in dem Regal eine Ausnehmung ausgebildet ist, durch die hindurch Werkzeuge vom Bediengerät an den Werkzeugwechsler oder umgekehrt übergebbar sind.

Die Abmessung dieser Ausnehmung wird in Abhängigkeit vom Störkreis des Werkzeugwechslers gewählt, so daß dieser ohne zusätzliche Verschiebung durch die Ausnehmung hindurch greifen kann.

Zur Vergrößerung der Werkzeugkapazität der Werkzeugmaschine können mehrere Regale vorgesehen werden, wobei diese Regale dann derart angeordnet sind, daß die darin aufgenommenen Werkzeuge in der gleichen Achsebene wie die Werkzeuge im benachbarten Regal angeordnet sind.

Das Auswechseln und Umsortieren der Werkzeuge im Regal läßt sich weiter vereinfachen, wenn mehrere Werkzeuge in einer auswechselbaren Kassette aufgenommen sind, die ihrerseits in das Regal einsetzbar ist.

Der Werkzeugwechsel läßt sich sehr schnell durchführen, wenn als Werkzeugwechsler ein 90°-Doppelgreifer verwendet wird, der zur Übernahme des Werkzeuges in die Ausnehmung und zur Übergabe des Werkzeuges an die Spindel in den Arbeitsraum einschwenkt.

Bei dieser Variante wird es bevorzugt, wenn der Schwenkmechanismus des Doppelgreifers mit dem Öffnungs-/Schließmechanismus einer Tür eines die Spindel umgebenden Arbeitsraumes in Wirkverbindung steht, so daß beim Einschwenken des Doppelgreifers in den Arbeitsraum selbsttätig die Tür geöffnet wird.

Das Auswechseln der vorgenannten Kassetten zur Aufnahme mehrerer Werkzeuge läßt sich besonders einfach mit einem Beschickungswagen durchführen, in dem Einschübe für zuzuführende und abzuführende Kassetten vorgesehen sind.

Dabei wird es bevorzugt, wenn der Kassettenwagen mit vier, in der Draufsicht ein Quadrat bildenden Einschüben versehen ist, wobei zwei mit neuen Kassetten belegt sind und zwei zur Aufnahme von Kassetten vorgesehen sind.

Eine Alternative zu dem Kassettenwagen mit vier Einschüben sieht einen Kassettenwagen drei Einschübe vor, die in der Draufsicht ein Dreieck bilden, wobei wahlweise zwei Einschübe mit neuen Kassetten belegt sind und ein Einschub zur Aufnahme von Kassetten vorgesehen ist.

Sonstige Weiterbildungen der Erfindung sind Gegenstand der weiteren Unteransprüche.

Im folgenden wird ein bevorzugtes Ausführungsbeispiel der Erfindung anhand schematischer Zeichnungen näher erläutert. Es zeigen:
Figur 1 eine Seitenansicht einer erfindungsgemäßen Werkzeugmaschine;
Figur 2 eine Vorderansicht der Werkzeugmaschine aus Figur 1;
Figur 3 eine Draufsicht auf die Werkzeugmaschine aus Figur 1;
Figur 4 Ansichten eines Beschickungswagens eines erfindungsgemäßen Werkzeugwechselsystemes mit vier Einschüben,
Figur 5 eine Ansicht eines Beschickungswagens eines weiteren erfindungsgemäßen Werkzeugwechselsystemes mit drei Einschüben,
Figur 6 ein Ablaufschema eines-Werkzeugwechsels, und
Figur 7 ein Ablaufschema eines optimierten Werkzeugwechsels.

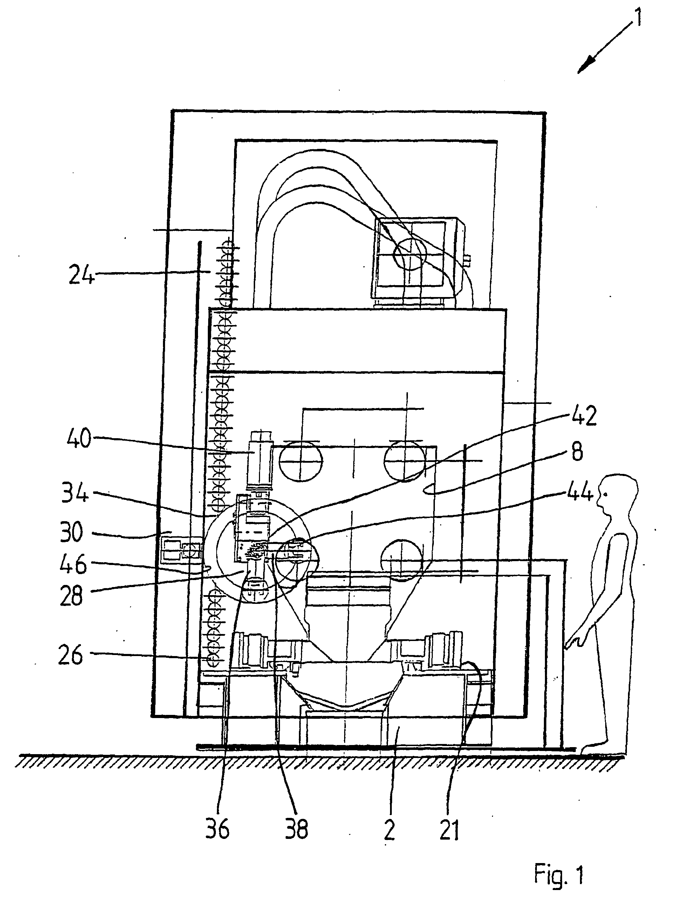

Figur 1 zeigt ein Bearbeitungszentrum 1, das durch seinen modulartigen Aufbau sehr flexibel an unterschiedliche Fertigungsaufgaben anpaßbar ist.

Das Bearbeitungszentrum 1 kann in Ständerbauweise, in Pinolenbauweise oder mit Linearantrieben ausgeführt sein. Bei dem in den Figuren 1 bis 3 dargestellten Ausführungsbeispiel hat das Bearbeitungszentrum 1 ein Maschinenbett 2, auf dem ein Maschinenständer 4 abgestützt ist. Dieser trägt eine Spindel 6, die mittels X-/Y-Führungen verfahrbar ist. Je nach Konstruktionsprinzip kann dann der Z-Vorschub durch eine Pinole, den Ständer oder einen Werkstücktisch durchgeführt werden. Die konkrete Ausführung ist je nach Konstruktionsprinzip (Pinole, Ständer, Linearantrieb) unterschiedlich und spielt für die im folgenden beschriebene Erfindung keine Rolle.

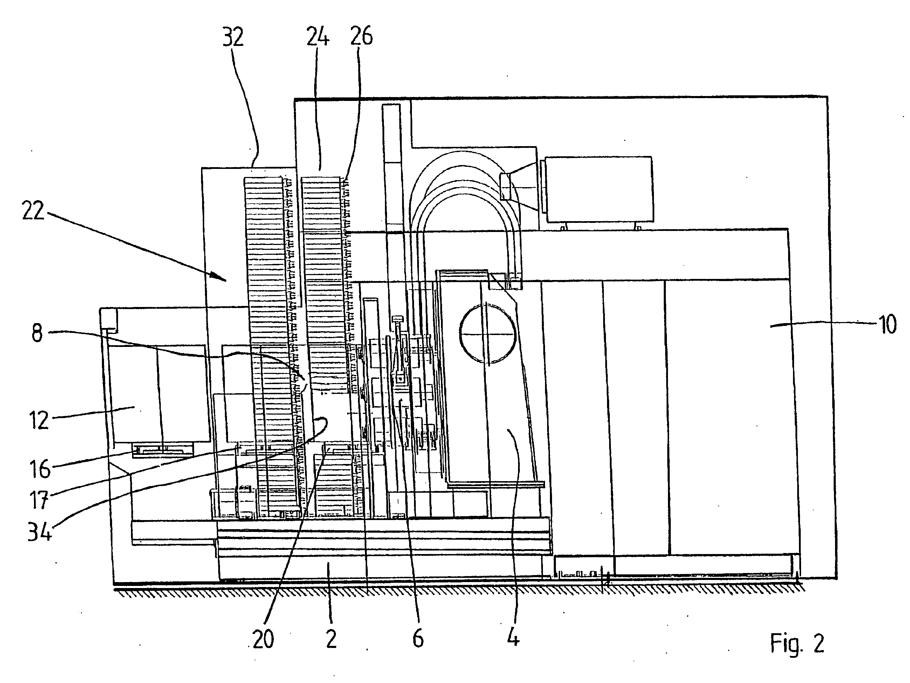

In der Darstellung gemäß den Figuren 1 und 2 ist die Spindel 6 in mehreren Arbeitspositionen innerhalb eines geschlossenen Arbeitsraumes 8 gezeigt.

Die Spindel 6 ist mit geeigneten Werkzeugspannsystemen, beispielsweise einer HSK ausgeführt. Die Maschinensteuerung mit der Kühlung der Maschine so wie die Hydraulik- und Kühlmittelanlagen sind in dem in Figur 2 mit dem Bezugszeichen 10 gekennzeichneten Bereich angeordnet.

Die Zu- und Abführung eines zu bearbeitenden Werkstückes 12 erfolgt mittels eines Palettenwechslers 14, der bei dem dargestellten Ausführungsbeispiel mit zwei Paletten 16, 17 ausgeführt ist. Diese sind um eine Achse 19 drehbar, so daß eine Palette 17 mit dem zu bearbeitenden Werkstück 18 im Arbeitsraum 8 und die andere Palette 16 zum be- bzw. entladen außerhalb des Arbeitsraumes angeordnet ist. Von der Palette wird das Werkstück auf einen NC-Drehtisch 20 übergeben, auf den das zu bearbeitende Werkstück 18 zur Bearbeitung festgespannt wird. Bei dem dargestellten Ausführungsbeispiel ist der NC-Drehtisch 20 über sich aus dem Arbeitsraum 8 heraus erstreckende Führungen 21 auf dem Maschinenbett 2 gelagert und somit in Z-Richtung verfahrbar.

Das Bearbeitungszentrum 1 hat ein erfindungsgemäßes Werkzeugwechselsystem 22, dessen wesentliche Bauelemente sind: zumindest ein Regal 24 zur Aufnahme mehrerer Werkzeuge 26, ein Werkzeugwechsler, der beim dargestellten Ausführungsbeispiel als Doppelgreifer 28 (Figur 1) ausgeführt ist und ein Regalbediengerät 30 (Figur 1), über das die Werkzeuge 26 aus dem Regal 24 entnehmbar und in eine Übernahmeposition (Figur 1) mit Bezug zum Doppelgreifer 28 bringbar sind.

Wie insbesondere Figur 2 entnehmbar ist, sind bei dem dargestellten Bearbeitungszentrum zwei Regale 24, 32 vorgesehen, in denen die Werkzeuge 26 jeweils übereinander liegend angeordnet sind. Die Achse der Werkzeuge 26 ist dabei parallel zur Spindelachse (Z-Achse) in einer Achsebene angeordnet. In der Grundversion ist jedoch nur ein Regal 24 vorgesehen.

Das Regalbediengerät 30 ist gemäß Figur 1 an der vom Doppelgreifer 28 entfernten Seite der Regale 24, 32 ausgebildet und ist in X-, Y-und Z-Richtung verfahrbar, so daß jedes der aufgenommenen Werkzeuge (beim dargestellten Ausführungsbeispiel 60 Werkzeuge 26) anfahrbar und aus den Regalen 24, 32 herausnehmbar bzw. in die entsprechende Position einsetzbar ist.

Gemäß Figur 2 ist das Regal 24 mit einer Ausnehmung 34 versehen. Diese Ausnehmung ist an den Störkreis des Doppelgreifers 28 angepaßt, so dass die im 90°-Winkel zugeordneten Greiferarme 36, 38 beim Verschwenken des Doppelgreifers 28 in diese Ausnehmung 34 eintauchen und in eine Übergabeposition mit Bezug zu dem in der Übernahmeposition hinter der Ausnehmung 34 stehenden Regalbediengerät (siehe Figur 1) eintauchen kann.

Der insbesondere; in Figur 1 sichtbare Doppelgreifer 28 ist seitlich neben dem Arbeitsraum 8 angeordnet und mittels eines Schwenkantriebes 40 um eine Drehachse 42 drehbar. Der Doppelgreifer 28 läßt sich des weiteren zum Ausheben oder Einsetzen des Werkzeuges 26 aus- bzw. in die Spindel 6 in Z-Richtung (senkrecht zur Zeichenebene in Figur 1) verfahren.

Jeder Greiferarm.36, 38 hat an seinem Endabschnitt U-förmige Greifer 44, mit denen das Werkzeug 26 form- oder kraftschlüssig aufnehmbar ist.

Die rechtwinklig zueinander stehende Greiferarme 36, 38 lassen sich entlang des Störkreises 46 umlaufend verschwenken. Beim Einschwenken der Greiferarme 36, 38 in den Arbeitsraum 8 wird eine Tür aufgesteuert, deren Öffnung/Schließmechanismus in Wirkverbindung mit dem Drehantrieb 40 des Doppelgreifers 28 steht. D.h., bei Verschwenken des Doppelgreifers 28 in Richtung des Arbeitsraumes 8 wird die Tür 48 selbsttätig auf- bzw, zugesteuert.

Das Bearbeitungszentrum 1 hat des weiteren eine nicht dargestellte Überwachungseinrichtung, über die beispielsweise der Verschleiß des Werkzeuges 26, der Werkzeugtyp oder sonstige wesentliche Parameter der Werkzeuge 26 erfaßbar sind. Über diese Überwachungseinrichtung läßt sich ein Signal an das Regalbediengerät 30 abgeben, so dass dieses ein fehlerhaftes Werkzeug 26 ausschleust oder an eine vorbestimmte Regalposition verfährt.

Bei einem bevorzugten Ausführungsbeispiel der Erfindung werden jeweils einige Werkzeuge in einer Kassette 50 zusammengefaßt, in der die Werkzeuge 26 übereinander liegend aufgenommen sind. Diese Kassetten werden dann in die Regale 24, 32 eingesetzt, so daß in sehr kurzer Zeit eine Vielzahl von Werkzeugen 26 auswechselbar ist.

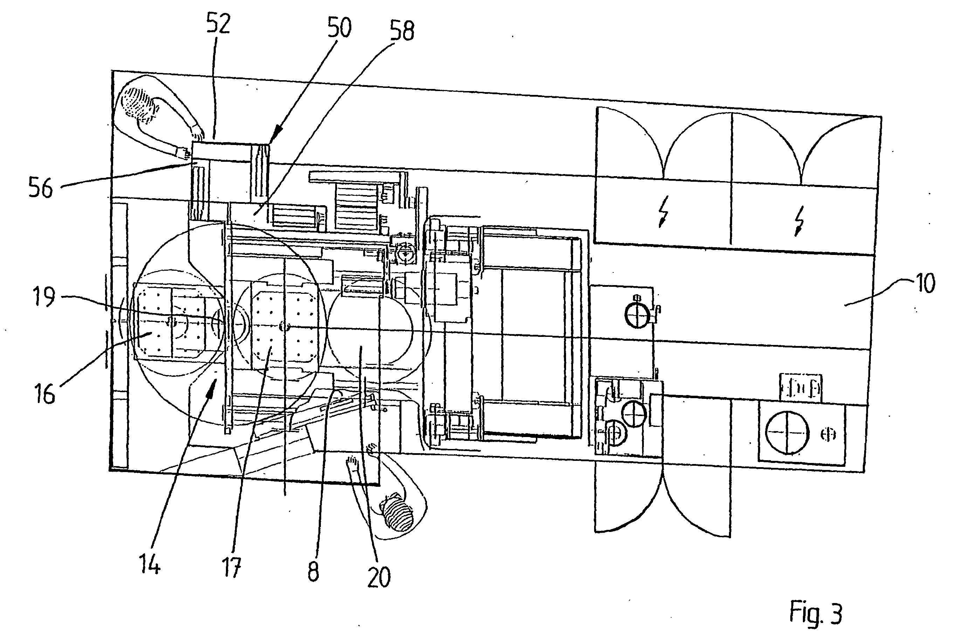

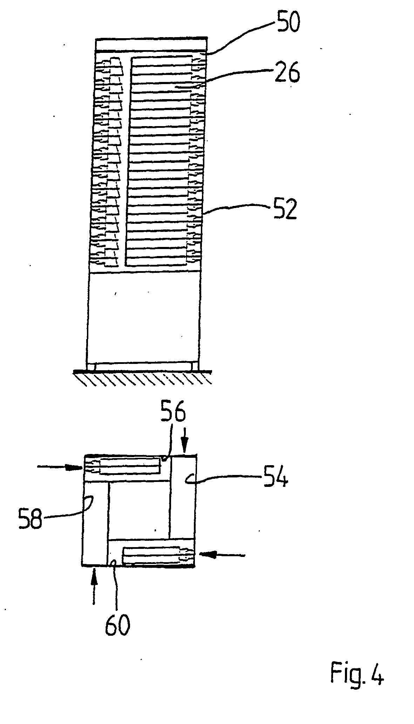

Zum Auswechseln der Kassetten 50 wird vorzugsweise ein Beschickungswagen 52 gemäß Figur 4 verwendet. Dieser Beschickungswagen 52 hat vier Einschübe 54, 56, 58 und 60, die in der Draufsicht in Figur 4 derart angeordnet sind, daß sie ein Quadrat begrenzen. Die Einschübe sind jeweils von der Stirnseite (Pfeil in Figur 4) her offen, so daß die Kassetten 50 in Pfeilrichtung einsetzbar sind. Zum Auswechseln einer Kassette 50 wird gemäß Figur 3 der Beschickungswagen 52 mit einem Einschub 58 mit Bezug zum Regal 32, 24 ausgerichtet und dann verschoben, so daß die Kassette 50 in den Einschub 58 eintaucht. Die Kassette 50 wird entnommen, der Wagen 52 um 90° gedreht und beispielsweise die im Einschub 56 befindliche Kassette 50 ins Regal 24, 32 eingesetzt. Der Beschickungswagen 52 kann mit einer Hubvorrichtung versehen sein, so daß jede Regalposition erreichbar ist.

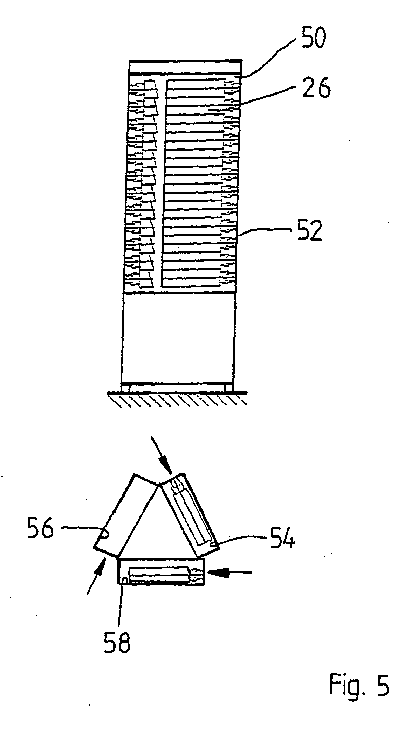

Eine Alternative zu dem Beschickungswagen 52 mit vier Einschüben (54, 56, 58, 60) sieht einen Beschickungswagen 62 mit drei Einschüben (54, 56, 58) vor, die in der Draufsicht ein Dreieck ergeben (Figur 5). Die drei Einschübe (54, 56, 58) sind wie bei der vorbeschriebenen Ausführungsform nach Figur 4 von der Stirnseite her (Pfeil in Figur 5) offen. Die Funktionsweise ist ähnlich der Funktionsweise des Beschickungswagens 52 mit vier Einschüben (54, 56, 58, 60), jedoch führt der dreischübige Beschickungswagen 62 keine 90° Drehungen zur Aufnahme und Übergabe der Kassetten 50 aus, sondern entsprechend seines dreieckigen Aufbaus 120° Drehungen.

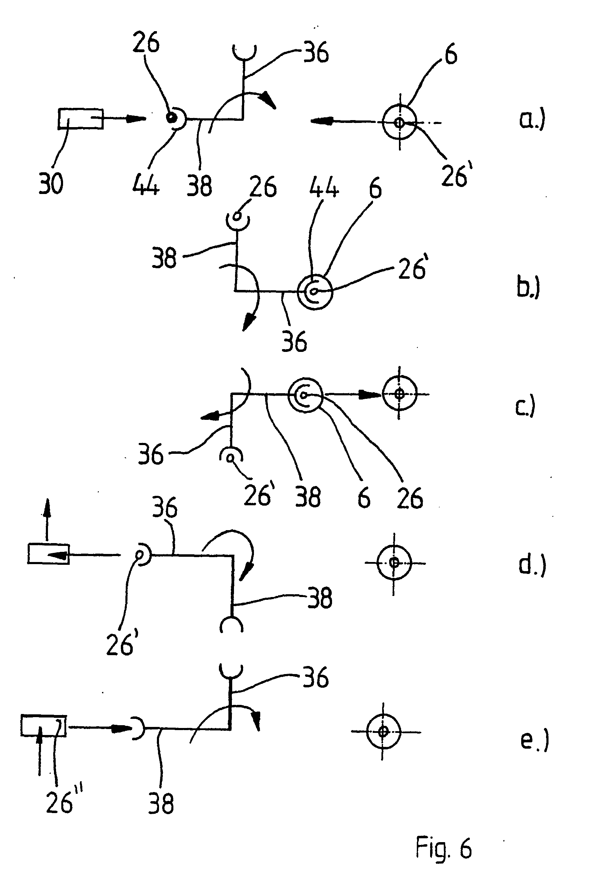

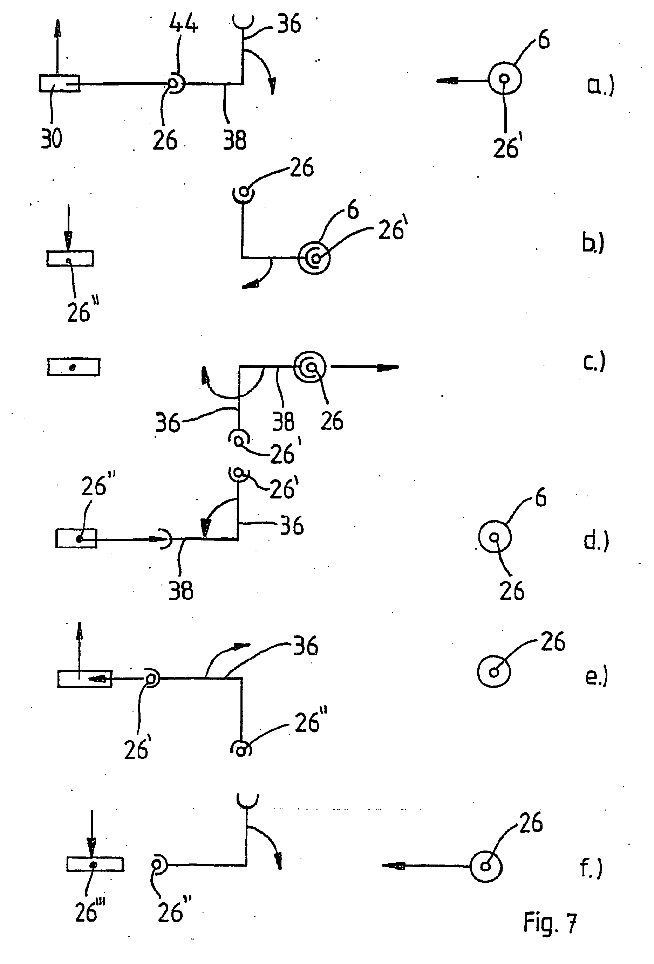

Die Funktion der erfindungsgemäßen Werkzeugwechselsysteme wird anhand der schematischen Darstellung in den Figuren 6 und 7 näher erläutert, wobei Figur 6 eine Variante zeigt, die nur dann eingesetzt wird, wenn längere Span-zu-Span-Zeiten akzeptabel sind.

Es sei angenommen, daß in die Spindel 6 ein Werkzeug 26' eingespannt ist und eine spanabhebende Bearbeitung durchgeführt wird. Gleichzeitig befindet sich im Greifer 44 des Greiferarmes 38 ein neu einzuwechselndes Werkzeug 26, das zuvor vom Regalbediengerät 30 übernommen wurde. Der Greiferarm 36 trägt kein Werkzeug.

Nach der spanabhebenden Bearbeitung wird die Spindel 6 mit dem Werkzeug 26' in eine Übergabeposition mit Bezug zum Doppelgreifer 28 gefahren und dieser gleichzeitig in den Arbeitsraum 8 eingeschwenkt. Über die Maschinensteuerung wird der Störkreis 46 des Doppelgreifers 28 überwacht, und gegebenenfalls die Spindel 6 abgebremst, so daß der Greiferarm 36 in die Übergabeposition fahren kann. Diese Übergabeposition ist in Figur 6 mit dem Buchstaben b gekennzeichnet. Dabei fährt die Spindel 6 mit dem abzulegenden Werkzeug 26' in den Greifer 44 ein, dieser ergreift das abzulegende Werkzeug 26' und der Doppelgreifer 28 macht einen Hub in Z- Richtung (senkrecht zur Zeichenebene in Figur 6), so daß das Werkzeug 26' von der Spindel 6 entnommen wird. Gleichzeitig setzt die Schwenkbewegung des Doppelgreifers 28 in Uhrzeigerrichtung ein, so daß der Greiferarm 36 gemäß Schritt c mit dem darin aufgenommenen Werkzeug 26' nach unten verschwenkt und das neu einzuwechselnde Werkzeug 26 mit dem Greiferarm 38 in die Übergabeposition mit Bezug zur Spindel gebracht wird. Der Doppelgreifer 28 führt dann einen Hub in Z-Richtung zum Einsetzen des Werkzeuges 26 in die Spindel 6 durch, diese fährt aus dem Kollisionsbereich heraus in ihre Arbeitsposition und der Doppelgreifer 28 wird gemäß Schritt d aus dem Arbeitsraum 8 herausgeschwenkt, so daß das abzulegende Werkzeug 26' in die Ausnehmung 34 hinein in eine Übernahmeposition geschwenkt wird. Das Regalbediengerät 30 übernimmt das Werkzeug 26' und legt dies auf seinen vorbestimmten Regalplatz ab und führt ein neu einzuwechseindes Werkzeug 26" zur Übernahmeposition, in der sich inzwischen der Greiferarm 38 befindet, in den das Werkzeug 26" eingesetzt wird - der Zyklus kann von neuem beginnen.

Beim erfindungsgemäßen Werkzeugwechselkonzept wird allerdings das in Figur 7 dargestellte Verfahren bevorzugt. Bei diesem sind die Schritte a, b und c im wesentlichen gleich wie beim vorbeschriebenen Ausführungsbeispiel. Der wesentliche Unterschied liegt darin, daß das Bediengerät 30 nach dem Übergeben des neu einzuwechselnden Werkzeuges 26 (Schritt a) sofort ein weiteres Werkzeug 26" aus dem Regal 24, 32 übernimmt und in die Übernahmeposition im Bereich der Ausnehmung 34 verfährt. Zwischenzeitlich wurde das sich bereits im Greifer 28 befindliche Werkzeug 26 an die Spindel übergeben, so daß der Greiferarm 38 frei ist. Der andere Greiferarm 36 trägt das abzulegende Werkzeug 26'.

Im folgenden Arbeitsgang wird der Doppelgreifer 28 aus dem Arbeitsraum 8 herausgeschwenkt und führt dabei - im Gegensatz zum vorbeschriebenen Ausführungsbeispiel - eine 180° Verschwenkung aus, so daß der freie Greiferarm 38 in die Übernahmeposition gebracht wird. Der mit dem Werkzeug 26' beladene Greiferarm 36 steht vertikal nach oben (Schritt d). Das vom Bediengerät 30 zur Verfügung gestellte Werkzeug 26" wird an den Greiferarm 38 übergeben, das Bediengerät 30 bleibt in seiner Wartestellung. Anschließend wird der Doppelgreifer 28 um 90° zurückverschwenkt, so daß der Greiferarm 36 mit dem abzulegenden Werkzeug 26' in die Übernahmeposition gebracht wird (Schritt e). Das Werkzeug 26' wird vom Bediengerät 30 übernommen und im Regal 24, 32 abgelegt. Anschließend schwenkt der Doppelgreifer um 90° in seine Ausgangsstellung und das Bediengerät 30 holt ein weiteres Werkzeug 26'" heran. Der Zyklus kann von neuem beginnen.

Durch das vorbeschriebene Werkzeugwechselverfahren sind somit immer zwei neu einzuwechselnde Werkzeuge in einer Art Puffer zur Verfügung, so daß äußerst kurze Span-zu-Span-Zeiten realisierbar sind.

Bei den vorbeschriebenen Ausführungsbeispielen wurde der Greifer überwiegend im Uhrzeigersinn verschwenkt. Selbstverständlich kann der Werkzeugwechsel auch bei einer Verschwenkung des Greifers in umgekehrter Richtung "von unten" durchgeführt werden.

Prinzipiell kann anstelle der Regale 24, 32 mit mehreren Kassetten 50 auch eine auswechselbare Kassette jeweils ein Regal bilden.

Bei ersten Tests zeigte es sich, daß sich mit dem erfindungsgemäßen Konzept Bereitstellungszeiten von unter einer Sekunde realisieren lassen.

Das erfindungsgemäße Verfahren läßt sich auch durchführen, indem das Bediengerät 30 in eine Übernahmeposition neben das Regal 24 verfahren wird.

Zur weiteren Verringerung der Span-zu-Span-Zeiten kann die Spannzange der Spindel 6 bereits geöffnet werden, während sie von ihrer Arbeitsposition in die Übergabeposition verfährt, so daß der Doppelgreifer 28 das alte Werkzeug 26 sofort herausziehen kann.

Offenbart ist ein Werkzeugwechselkonzept, bei dem Werkzeuge in einem Regal aufgenommen sind und mittels eines hinter dem Regal stehenden Bediengerätes entnommen und durch das Regal hindurch einem Werkzeugwechsler zugeführt werden, von dem ein Werkzeug aus einer Spindel des Bearbeitungszentrums entnehmbar und das vom Regalbediengerät zugeführte Werkzeug einsetzbar ist.

### Bezugszeichenliste

- 1: Bearbeitungszentrum
- 2: Maschinenbett
- 4: Ständer
- 6: Spindel
- 8: Arbeitsraum
- 10: Bereich
- 12: Werkstück
- 14: Palettenwechsler
- 16: Palette
- 17: Palette
- 18: Werkstück
- 19: Schwenkachse
- 20: NC-Drehtisch
- 21: Führungen
- 22: Werkzeugwechselsystem
- 24: Regal
- 26: Werkzeug
- 28: Doppelgreifer
- 30: Regalbediengerät
- 32: Regal
- 34: Ausnehmung
- 36: Greiferarm
- 38: Greiferarm
- 40: Drehantrieb
- 42: Drehachse
- 44: Greifer
- 46: Störkreis
- 48: Tür
- 50: Kassette
- 52: Beschickungswagen
- 54: Einschub
- 56: Einschub
- 58: Einschub
- 60: Einschub
- 62: Beschickungswagen

## Patentansprüche

1. Verfahren zum Wechseln von Werkzeugen einer Werkzeugmaschine mit einer Werkzeug aufnehmenden Spindel mit einer Spindelachse und einem Werkzeugwechsler zur Aufnahme zumindest zweier Werkzeuge, über den ein Werkzeug von einem Werkzeugmagazin an die Spindel oder von dieser an das Werkzeugmagazin übergebbar ist, wobei das Werkzeugmagazin ein Regal ist, welches parallel zur Spindelachse angeordnete Werkzeuge aufnimmt, mit den Schritten:
- Aufnahme eines gewünschten Werkzeuges (26) aus dem Regal (24, 32) mittels eines Bediengeräts (30), welches auf der vom Werkzeugwechsler (28) entfernten Seite des Regals (24, 32) verfahrbar ist;
- Verfahren dieses Werkzeuges (26) in eine Übernahmeposition;
- Übergeben dieses Werkzeugs (26) an den Werkzeugwechsler (28) durch eine Ausnehmung (34) des Regals (24, 32) hindurch;
- Verfahren des Werkzeugwechslers (28) in eine Übergabeposition zur Aufnahme eines in der Spindel (6) eingespannten und abzulegenden Werkzeugs (26');
- Aufnahme eines als nächstes gewünschten Werkzeugs (26") aus dem Regal (24, 32) durch das Bediengerät (30) und Verfahren dieses Werkzeugs (26") in die Übernahmeposition;
- Verfahren der Spindel (6) mit dem eingespannten abzulegenden Werkzeug (26') in die Übergabeposition;
- Übernehmen des abzulegenden Werkzeugs (26') aus der Spindel (6) mit dem Werkzeugwechsler (28);
- Verfahren des gewünschten Werkzeugs (26) mittels des Werkzeugwechslers (28) in die Übergabeposition zur Übergabe des Werkzeugs (26) an die Spindel (6);
- Übergeben dieses Werkzeugs (26) an die Spindel (6);
- Herausfahren des Werkzeugwechslers (28) aus dem Arbeitsraum (8) der Werkzeugmaschine in die Übernahmeposition und Verfahren der Spindel (6) in die Arbeitsposition;
- Aufnahme des weiteren Werkzeugs (26") durch den Werkzeugwechsler (28);
- Übernahme des abzulegenden Werkzeugs (26') mittels des Bediengerätes (30) von dem Werkzeugwechsler (28);
- Ablegen dieses Werkzeugs (26') im Regal (24, 32) mittels des Bediengeräts (30).

2. Verfahren nach Patentanspruch 1, wobei im Magazin (24, 32) aufgenommene Werkzeuge (26) während der Bearbeitungs-Hauptzeit der Werkzeugmaschine von außen wechselbar sind.

3. Verfahren nach Patentanspruch 1 oder 2, wobei der Verschleiß des Werkzeugs (26), der Werkzeugtyp oder sonstige Werkzeugparameter erfaßt und in Abhängigkeit von diesen Parametern Werkzeuge (26) mittels des Bediengeräts ausgeschleust werden.

4. Werkzeugwechselsystem für eine Werkzeugmaschine, mit einem Werkzeugwechsler (28) mit zumindest zwei Aufnahmen (44) für ein Werkzeug (26), das an zumindest eine oder von zumindest einer Spindel (6) mit einer Spindelachse (Z) übergebbar ist, mit einem Werkzeugmagazin (24, 32), in dem eine Vielzahl von Werkzeugen (26) aufgenommen ist, und mit einem Bediengerät (30), über das die Werkzeuge (26) aus dem Magazin (24, 32) entnehmbar und in eine Vorposition zur Übergabe des Werkzeugs (26) an den Werkzeugwechsler (28) bringbar sind, **dadurch gekennzeichnet, daß** das Werkzeugmagazin ein Regal (24, 32) zur Aufnahme parallel zur Spindelachse (Z) angeordneter Werkzeuge (26) ist, daß das Bediengerät (30) auf der vom Werkzeugwechsler (28) entfernten Seite des Regals (24, 32) verfahrbar ist, daß das Regal (24, 32) eine Ausnehmung (34) hat, durch die hindurch das Werkzeug (26) vom Bediengerät (30) zum Werkzeugwechsler (28) übergebbar ist und daß die Ausnehmung (34) in der Abmessung an den Störkreis (46) des Werkzeugwechslers (28) angepaßt ist.

5. Werkzeugwechselsystem nach Patentanspruch 4, wobei das Regal (24, 32) zumindest zwei in Z-Richtung gesehen hintereinanderliegende Regalreihen hat.

6. Werkzeugwechselsystem nach Patentanspruch 4 oder 5, wobei im Regal (24, 32) mehrere auswechselbare Kassetten (50) zur Aufnahme von Werkzeugen aufgenommen sind.

7. Werkzeugwechselsystem nach einem der Patentansprüche 4 bis 6, wobei der Werkzeugwechsler ein schwenkbarer Doppelgreifer (28) ist.

8. Werkzeugwechselsystem nach Patentanspruch 7, wobei ein die Spindel (6) umgebender Arbeitsraum (8) mittels einer Tür verschließbar ist, deren Öffnungs-/Schließmechanismus in Wirkverbindung mit dem Schwenkmechanismus des Doppelgreifers (28) steht.

9. Werkzeugwechselsystem nach einem der Patentansprüche 4 bis 8, mit einer Überwachungseinrichtung zur Erfassung des Werkzeugverschleißes, des Werkzeugtyps oder sonstiger Parameter des Werkzeugs und mit einer Steuerung, über die in Abhängigkeit von einem von der Überwachungseinrichtung abgegebenen Signal Werkzeuge (26) aus dem Regal (24, 32) ausschleusbar sind.

10. Werkzeugwechselsystem nach einem der Patentansprüche 4 bis 9, **dadurch gekennzeichnet, daß** ein Beschickungswagen (52; 62) vorgesehen ist, der mit mehreren, eine Umfangsfläche bildenden Einschüben (54, 56, 58, 60) für Kassetten (50) eines Regals (24, 32) zur Aufnahme von Werkzeugen (26) ausgebildet ist.

11. Werkzeugwechselsystem nach Patentanspruch 10, wobei die Kassetten (50) stirnseitig in die Einschübe (54, 56, 58, 60) einsetzbar sind.

12. Werkzeugwechselsystem nach Patentanspruch 10 oder 11, wobei vier Einschübe (54, 56, 58, 60) für Kassetten (50) etwa ein Quadrat bilden, wobei jeweils ein Einschub zum Eckbereich des Quadrats hin offen ist.

13. Werkzeugwechselsystem nach Patentanspruch 10 oder 11, wobei drei Einschübe (54, 56, 58) für Kassetten (50) etwa ein Dreieck bilden, wobei jeweils ein Einschub zum Eckbereich des Dreiecks hin offen ist.

## Claims

1. A method for changing tools in a machine tool having a tool-accommodating spindle which has a spindle axis and a tool changer which is intended for picking up at least two tools and via which a tool can be transferred from a tool magazine to the spindle or from the latter to the tool magazine, the tool magazine being a rack which accommodates tools disposed parallel to the spindle axis, the method having the following steps:
- picking up a desired tool (26) from the rack (24, 32) by means of a storage and retrieval unit (30) which can be displaced on that side of the rack (24, 32) which is remote from the tool changer (28);
- displacing this tool (26) into a receiving position;
- transferring this tool (26) to the tool changer (28) through an aperture (34) of the rack (24, 32);
- displacing the tool changer (28) into a transfer position for picking up a tool (26') which is clamped in the spindle (6) and is to be relinquished;
- using the storage and retrieval unit (30) to pick up the next desired tool (26'') from the rack (24, 32) and displace this tool (26'') into the receiving position;
- displacing the spindle (6), with the clamped-in tool (26') which is to be relinquished, into the transfer position;
- using the tool changer (28) to receive from the spindle (6) the tool (26') which is to be relinquished;
- using the tool changer (28) to displace the desired tool (26) into the transfer position for transferring the tool (26) to the spindle (6);
- transferring this tool (26) to the spindle (6);
- moving the tool changer (28) out of the operating space (8) of the machine tool into the receiving position and displacing the spindle (6) into the operating position;
- using the tool changer (28) to pick up the further tool (26'');
- using the storage and retrieval unit (30) to receive from the tool changer (28) the tool (26') which is to be relinquished;
- using the storage and retrieval unit' (30) to relinquish this tool (26') in the rack (24, 32).

2. A method according to Claim 1, in which tools (26) accommodated in the magazine (24, 32) can be changed from the outside during the main machining time of the machine tool.

3. A method according to Claim 1 or 2, in which the wear of the tool (26), the type of tool or other tool parameters are sensed and, in dependence on these parameters, tools (26) are removed by means of the storage and retrieval unit.

4. A tool-changing system for a machine tool, having a tool changer (28) with at least two receivers (44) for a tool (26) which can be transferred to at least one, or from at least one, spindle (6) which has a spindle axis (Z), having a tool magazine (24, 32) in which a multiplicity of tools (26) are accommodated, and having a storage and retrieval unit (30) via which the tools (26) can be removed from the magazine (24, 32) and moved into a preliminary position for transferring the tool (26) to the tool changer (28), **characterized in that** the tool magazine is a rack (24, 32) for accommodating tools (26) disposed parallel to the spindle axis (Z), that the storage and retrieval unit (30) can be displaced on that side of the rack (24, 32) which is remote from the tool changer (28), that the rack (24, 32) has an aperture (34) through which the tool (26) can be transferred from the storage and retrieval unit (30) to the tool changer (28) and that the aperture (34) is adapted in its dimensions to the interference circle (46) of the tool changer (28).

5. A tool-changing system according to Claim 4, in which the rack (24, 32) has at least two rows of racks located one behind the other in the Z-direction.

6. A tool-changing system according to Claim 4 or 5, in which a plurality of exchangeable cassettes (50) for accommodating tools are accommodated in the rack (24, 32).

7. A tool-changing system according to one of Claims 4 to 6, in which the tool changer is a pivotable double gripper (28).

8. A tool-changing system according to Claim 7, in which an operating space (8) enclosed by the spindle (6) can be closed by means of a door, the opening/closing mechanism of which is in operative connection with the pivoting mechanism of the double gripper (28).

9. A tool-changing system according to one of Claims 4 to 8, having a monitoring device for sensing the tool wear, the type of tool or other parameters of the tool, and having a control means via which, in dependence on a signal emitted by the monitoring device, tools (26) can be removed from the rack (24, 32).

10. A tool-changing system according to one of Claims 4 to 9, **characterized in that** a loading carriage (52; 62) is provided, which is formed with a plurality of inserts (54, 56, 58, 60) which define a peripheral surface and are intended for cassettes (50) of a rack (24, 32) for accommodating tools (26).

11. A tool-changing system according to Claim 10, in which the cassettes (50) can be inserted into the inserts (54, 56, 58, 60) at the end face.

12. A tool-changing system according to Claim 10 or 11, in which four inserts (54, 56, 58, 60) for cassettes (50) approximately form a square, in each case one insert being open in the direction of the corner region of the square.

13. A tool-changing system according to Claim 10 or 11, in which three inserts (54, 56, 58) for cassettes (50) approximately form a triangle, in each case one insert being open in the direction of the corner region of the triangle.

## Revendications

1. Procédé de changement d'outils d'une machine-outil comprenant une broche dotée d'un axe de broche et logeant un outil, et un changeur d'outils pour la prise d'au moins deux outils, changeur d'outils par lequel un outil peut être transféré d'un magasin d'outils, à la broche, ou bien de celle-ci au magasin d'outils, où le magasin d'outils est un rayonnage qui reçoit des outils disposés parallèlement à l'axe de la broche, ledit procédé comprenant les étapes suivantes :
- la prise d'un outil souhaité (26) provenant du rayonnage (24, 32), au moyen d'un organe de commande (30), lequel outil peut être déplacé sur le côté du rayonnage (24, 32) éloigné du changeur d'outils (28) ;
- le déplacement de cet outil (26) dans une position de prise en charge ;
- le transfert de cet outil (26) au changeur d'outils (28), à travers un évidement (34) du rayonnage (24, 32) ;
- le déplacement du changeur d'outils (28) dans une position de transfert, pour la prise d'un outil (26') serré dans la broche (6) et à déposer ;
- la prise, par l'organe de commande (30), d'un outil souhaité (26") considéré comme l'outil suivant, sortant du rayonnage (24, 32), et le déplacement de cet outil (26") dans la position de prise en charge ;
- le déplacement de la broche (6), l'outil (26') serré à déposer étant dans la position de transfert ;
- la prise en charge, par le changeur d'outils (28), de l'outil (26') à déposer sortant de la broche (6) ;
- le déplacement de l'outil souhaité (26) au moyen du changeur d'outils (28) passant dans la position de transfert pour le transfert de l'outil (26) à la broche (6) ;
- le transfert de cet outil (26) à la broche (6) ;
- le déplacement du changeur d'outils (28) sortant de l'espace de travail (8) de la machine-outil dans la position de prise en charge, et le déplacement de la broche (6) dans la position de travail ;
- la prise de l'autre outil (26") par le changeur d'outils (28) ;
- la prise en charge, par le changeur d'outils (28), de l'outil (26') à déposer au moyen de l'organe de commande (30) ;
- le dépôt de cet outil (26') dans le rayonnage (24, 32), au moyen de l'organe de commande (30).

2. Procédé selon la revendication 1, dans lequel des outils (26) logés dans le magasin (24, 32) peuvent être changés de l'extérieur, au cours de la période principale d'usinage de la machine-outil.

3. Procédé selon la revendication 1 ou 2, dans lequel sont détectés l'usure de l'outil (26), le type de l'outil ou d'autres paramètres de l'outil et, en fonction de ces paramètres, des outils (26) sont enlevés au moyen de l'organe de commande.

4. Système de changement d'outils pour une machine-outil, comprenant un changeur d'outils (28) comportant au moins deux logements (44) pour un outil (26) qui peut être transféré à au moins une ou depuis au moins une broche (6) dotée d'un axe de broche (Z), un magasin d'outils (24, 32) dans lequel sont logés une multiplicité d'outils (26), et comprenant un organe de commande (30) au moyen duquel les outils (26) peuvent être extraits du magasin (24, 32) et placés dans une position avancée pour le transfert de l'outil (26) au changeur d'outils (28), **caractérisé**
**en ce que** le magasin d'outils est un rayonnage (24, 32) pour la réception d'outils (26) disposés parallèlement à l'axe de broche (Z),
**en ce que** l'organe de commande (30) peut être déplacé sur le côté du rayonnage (24, 32) éloigné du changeur d'outils (28),
**en ce que** le rayonnage (24, 32) comporte un évidement (34) à travers lequel l'outil (26) peut être transféré de l'organe de commande (30) vers le changeur d'outils (28), et
**en ce que** l'évidement (34) est adapté, en dimension, à la zone d'influence (46) du changeur d'outils (28).

5. Système de changement d'outils selon la revendication 4, dans lequel le rayonnage (24, 32) comporte au moins deux rangées de rayonnage placées l'une derrière l'autre en regardant dans la direction Z.

6. Système de changement d'outils selon la revendication 4 ou 5, dans lequel plusieurs cassettes remplaçables (50) servant au logement d'outils sont logées dans le rayonnage (24, 32).

7. Système de changement d'outils selon l'une quelconque des revendications 4 à 6, dans lequel le changeur d'outils est un double préhenseur (28) pouvant pivoter.

8. Système de changement d'outils selon la revendication 7, dans lequel un espace de travail (8) entourant la broche (6) peut être fermé au moyen d'une porte dont le mécanisme d'ouverture / de fermeture est en liaison active avec le mécanisme pivotant du double préhenseur (28).

9. Système de changement d'outils selon l'une quelconque des revendications 4 à 8, comprenant un dispositif de contrôle servant à détecter l'usure de l'outil, le type de l'outil ou d'autres paramètres de l'outil, et comprenant une commande par laquelle, en fonction d'un signal fourni par le dispositif de contrôle, des outils (26) peuvent être enlevés du rayonnage (24, 32).

10. Système de changement d'outils selon l'une quelconque des revendications 4 à 9, **caractérisé en ce qu'**il est prévu un chariot de chargement (52 ; 62) qui, avec plusieurs tiroirs (54, 56, 58, 60) formant une surface périphérique pour des cassettes (50) d'un rayonnage (24, 32), est configuré pour le logement d'outils (26).

11. Système de changement d'outils selon la revendication 10, dans lequel les cassettes (50) peuvent être introduites, côté frontal, dans les tiroirs (54, 56, 58, 60).

12. Système de changement d'outils selon la revendication 10 ou 11, dans lequel quatre tiroirs (54, 56, 58, 60) pour des cassettes (50) forment par exemple un carré où à chaque fois un tiroir est ouvert vers la zone angulaire du carré.

13. Système de changement d'outils selon la revendication 10 ou 11, dans lequel trois tiroirs (54, 56, 58) pour des cassettes (50) forment par exemple un triangle où à chaque fois un tiroir est ouvert vers la zone angulaire du triangle.
